**Europäisches Patentamt**

**European Patent Office**

**Office européen des brevets**

(1) Publication number: **0 213 937**
**B1**

# EUROPEAN PATENT SPECIFICATION

(45) Date of publication of patent specification: **09.01.91**

(21) Application number: **86306668.4**

(22) Date of filing: **28.08.86**

(51) Int. Cl.⁵: **G 11 B 21/10** // G11B15/467, G11B15/18, G11B20/10

(54) Apparatus for recording an information signal.

(30) Priority: **30.08.85 JP 191728/85**

(43) Date of publication of application:
**11.03.87 Bulletin 87/11**

(45) Publication of the grant of the patent:
**09.01.91 Bulletin 91/02**

(84) Designated Contracting States:
**DE FR GB NL**

(56) References cited:
**EP-A-0 094 207
EP-A-0 102 600
JP-A-59 042 606
NL-A-8 302 117**

**IEEE INTERNATIONAL CONFERENCE ON CONSUMER ELECTRONICS 1985, 5th-7th June 1985, pages 50,51, session III, WAM 3.5, IEEE, New York, US; S. ITOH et al.: "Multi-track PCM audio utilizing 8mm video system"**

(73) Proprietor: **SONY CORPORATION
7-35 Kitashinagawa 6-Chome Shinagawa-ku
Tokyo 141 (JP)**

(72) Inventor: **Takahashi, Takao c/o Patents Division
Sony Corporation 6-7-35 Kitashinagawa
Shinagawa-ku Tokyo 141 (JP)**
Inventor: **Nakano, Kenji c/o Patents Division
Sony Corporation 6-7-35 Kitashinagawa
Shinagawa-ku Tokyo 141 (JP)**

(74) Representative: **Pilch, Adam John Michael et al
c/o D. Young & Co. 10 Staple Inn
London WC1V 7RD (GB)**

(56) References cited:
**PATENT ABSTRACTS OF JAPAN, vol. 9, no. 97 (P-352)1820r, 26th April 1985; & JP-A-59 221 856 (CANON K.K.) 13-12-1984**

**PATENT ABSTRACTS OF JAPAN, vol. 8, no. 33 (P-254)1470r, 14th February 1984; & JP-A-58 188 324 (HITACHI SEISAKUSHO K.K.) 02-11-1983**

**PATENT ABSTRACTS OF JAPAN, vol. 8, no. 183 (P-296)1620r, 23rd August 1984; & JP-A-59 75 452 (SONY K.K.) 28-04-1984**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to apparatus for recording an information signal on a track of a record medium scanned by a rotary head, the track being divided into a number of areas, as defined in the preamble of claim 1.

A recording format of this type may be utilised when an 8-mm video tape recorder is exclusively used for recording and/or reproducing a pulse-code-modulated (PCM) audio signal. A pilot signal is recorded and/or reproduced for tracking. This pilot signal is used in the reproduction mode by a rotary head when the tracking pilot signal is superimposed upon the information signal.

An 8-mm video tape recorder can operate in a recording mode in which an audio signal is frequency modulated, mixed with a colour video signal so as to be separable from the colour video signal, and then recorded on the tape. In an additional optional mode, this audio signal can be pulsecode-modulated and recorded in an area separate from that of the colour video signal, one track being formed by both the PCM audio signal and the colour video signal.

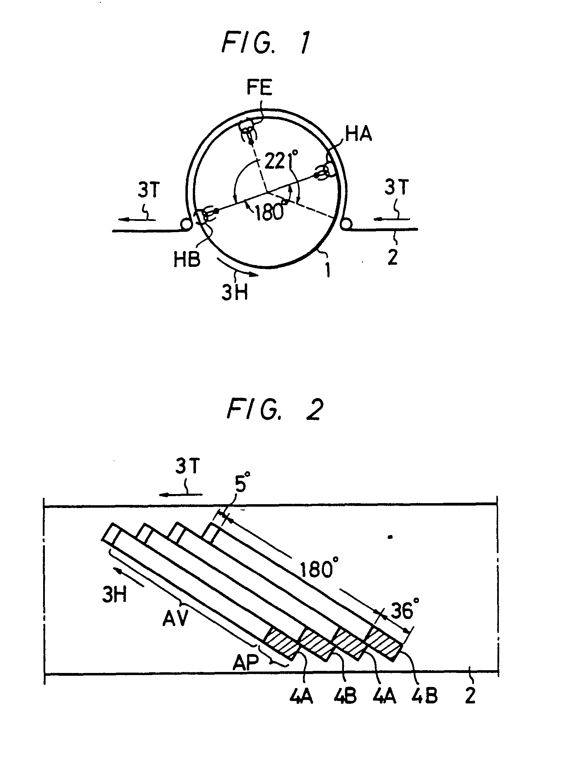

Figure 1 of the accompanying drawings shows one example of a rotary head assembly of an 8-mm video tape recorder, and Figure 2 of the accompanying drawings shows the tape format thereof.

In Figure 1, recording and reproducing rotary magnetic heads HA and HB are arranged so that the azimuth angles of their recording gaps are different, and are mounted at an angular spacing of 180° on the periphery of a rotary drum 1 so as to project slightly from the peripheral surface of the rotary drum 1.

The rotary magnetic heads HA and HB are rotated at a rotational speed corresponding to the frame frequency (30 Hz for the NTSC standard) in the direction shown by an arrow 3H. A magnetic tape 2 is wrapped around the periphery of the drum 1 over an angular spacing of more than 221°, and is transported at a constant speed in the direction shown by arrows 3T.

Accordingly, as shown in Figure 2, the rotary heads HA and HB alternately form tracks 4A and 4B of length 221° on the tape 2 thereby to record the signal. On the tracks 4A and 4B, in an area AP having an angular range of about 36° (including a margin for recording the PCM audio signal in the so-called after-recording mode and a guard band area), there is recorded a PCM audio signal with a compressed time base associated with one field period of the video signal. In an adjacent area AV having an angular range of 180°, there are recorded a colour video signal of one field period, an FM audio signal, and a pilot signal for tracking. The remaining area having an angular range of 5° is assigned as a spare area or period for the time in which the respective head is detached from the magnetic tape 2.

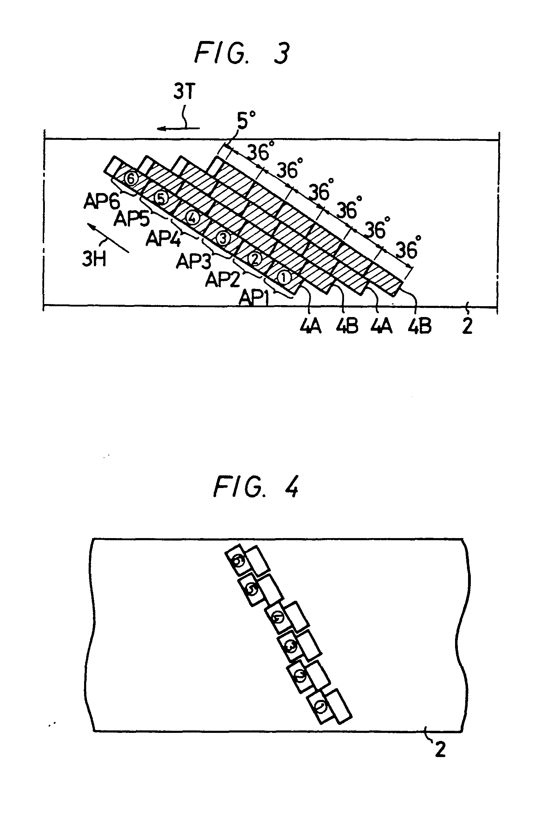

As described above, the 8-mm video tape recorder is capable of recording and/or reproducing a PCM audio signal. A technique for enabling the 8-mm video tape recorder to be used as a PCM audio signal recording and/or reproducing apparatus by using the colour video signal recording area AV as a PCM audio signal recording area has been proposed in U.S. Patent Application Serial No. 463 337, filed on 2 February 1983. Specifically, the area AV having an angular spacing of 180° in which the video signal and the like are normally recorded is five times as long as the PCM area AP having an angular spacing of 36°. So, by dividing the area AV equally by five, there are provided five divided track areas AP2 to AP6 (shown by "2" to "6") per track 4A, in addition to the original PCM audio signal track area AP1 (indicated by "1"), as shown in Figure 3 of the accompanying drawings. The PCM audio signal of one channel, that is the audio signal of one field period which is pulse-code-modulated and time-base-compressed, can then be recorded on and/or reproduced from each of the six divided track areas AP1 to AP6.

Therefore, in this case, since an audio signal of one channel can be recorded and/or reproduced within each single area, an audio signal of six channels can be recorded and/or reproduced, making the recording time six times as long and the capacity six times as great as that in the above-described video tape recorder. This technique will be hereinafter referred to as a multi-PCM technique or mode.

It is sufficient for a PCM processor to be used in the multi-PCM mode to be a one channel processor such as is used in the conventional 8-mm video tape recorder, because the recording and/or reproducing is carried out at each divided track area. In this case, a pilot signal for tracking is recorded and/or reproduced at each divided track area (see Japanese Laid Open Patent Application No. 59—43682).

As described above, in the multi-PCM mode, the pilot signal for tracking is recorded and/or reproduced at a predetermined area or unit of each divided track area so that the recording tracks from the channels "1" to "6" are rarely aligned rectilinearly along the scanning direction of the rotary head as shown in Figure 3, but are generally arranged in an arbitrary and non-aligned manner, as shown in Figure 4 of the accompanying drawings.

If recording and/or reproduction is carried out at the unit (or single predetermined area) of each divided track area, that is at the channel unit, it is not necessary that the divided recording tracks be aligned as shown in Figure 3.

In order to reproduce a slave tape from a recorded master tape, a method is known in which the recorded modulated signal is picked up by a rotary head and recorded on the slave tape without being demodulated, thereby to carry out a high speed dubbing operation. This high speed dubbing method does not require demodulation of the recorded signal, but needs only a master tape on which the signal was recorded with a recording pattern which is the same as that required for the slave tape.

Therefore, if it is possible for the signals from the track areas "1" to "6" on a track to be reproduced by one scanning of the rotary head, and the reproduced signals are to be recorded similarly on the slave tape, dubbing can be carried out with good efficiency. For this purpose, the divided recording tracks must be aligned along the scanning direction of the rotary head.

Furthermore, since the exclusive PCM audio signal recording and/or reproducing apparatus is capable of recording multi-channel signals, a mode is possible such that, for example, sounds of respective musical instruments in an orchestra can be separately recorded on each of the channels. Upon reproduction, the recorded signals of the six channels are simultaneously reproduced as if the respective musical instruments were being played in concert. In this case also, the tracks each having six channels must be aligned along the scanning direction of the rotary head.

US-A-4573089 discloses the use of an overscan section for the recording of tracking signals only. During insertive recording when the one head is reading the overscan section, the other head is recording in the maintrack portion. The tracking signals obtained by the head from the overscan section are used for aligning the other head on the main track portion.

According to one aspect of the present invention there is provided apparatus for recording an information signal on a track of a record medium apparatus for recording a further information signal on a slant track of a record medium scanned by a rotary head, said track being divided into a number of areas, and a tracking pilot signal superimposed on an original information signal being pre-recorded in a predetermined area on said track, the apparatus comprising:

means for reproducing said tracking pilot signal from said predetermined area by means of said rotary head and for deriving a tracking control signal from the reproduced pilot signal; and

means for recording said further information signal in an area other than said predetermined area on said track; characterised by

means for sampling and holding the tracking control signal derived from said predetermined area; and

means for controlling tracking of said rotary head by said sampled and held tracking control signal during recording of said further information signal.

The information signal can be recorded and/or reproduced at a selected area of each of the divided tracks, and the reproduced tracking pilot signal can be recorded and/or reproduced by the rotary head when it is superimposed upon the information signal. In this case, while the tracking servo in the playback mode is effected by using the reproduced tracking pilot signal from the divided area on which recording has already been made, the information signal is recorded in the other divided areas. Since the rotary head scans the track under the condition that it correctly tracks the divided previously-recorded area, the recording tracks of other divided areas are located at the positions which are extended along the scanning direction of the rotary head, thus aligning the recording tracks of the plurality of channels.

A preferred embodiment of this invention provides an apparatus for recording an information signal in which a plurality of divided recording tracks can be aligned rectilinearly along the scanning direction of the rotary head, which apparatus can be applied to an 8-mm video tape recorder, particularly when it is operated in the multi-PCM mode.

The invention will now be described by way of example with reference to the accompanying drawings, throughout which like parts are referred to by like references, and in which:

Figure 1 is a diagram showing one example of a rotary head assembly of an 8-mm video tape recorder to which the present invention may be applied;

Figure 2 is a diagram showing one example of a recording track pattern formed by the 8-mm video tape recorder of Figure 1;

Figure 3 is a diagram of one example of a recording track pattern formed by the 8-mm video tape recorder when it is used in a multi-PCM mode.

Figure 4 is a diagram of one example of a recording track pattern formed in a multi-PCM mode showing defects which may be encountered;

Figure 5 is a block diagram showing an embodiment of apparatus for recording an information signal according to the present invention;

Figures 6A to 6L, 7A to 7D and 8A to 8M are respectively timing charts, track diagrams, and further timing charts used to explain the operation of the apparatus shown in Figure 5;

Figure 9 is a block diagram showing another embodiment of the present invention; and

Figures 10A to 10I are timing charts used to explain the operation of the apparatus shown in Figure 9.

Embodiments of the invention will hereinafter be described in detail, using as an example the above-mentioned 8-mm video tape recorder used in a multi-PCM mode.

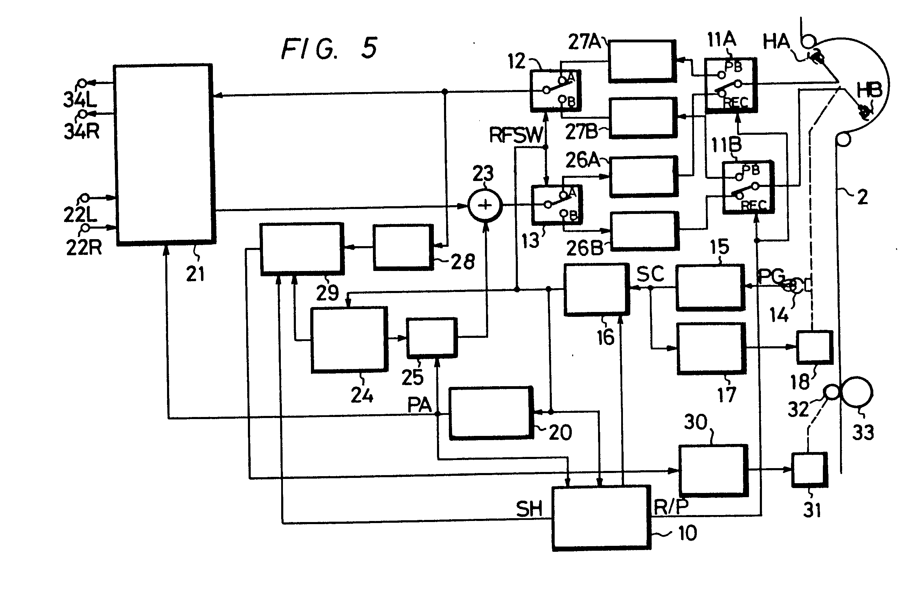

Referring to Figure 5, one embodiment of apparatus for recording an information signal includes recording and reproducing change-over switching circuits 11A and 11B. A recording and reproducing switching signal R/P from a system controller 10 is supplied to the switching circuits 11A and 11B, causing the switching circuits 11A and 11B to connect rotary heads HA and HB to terminals REC upon recording and to terminals PB upon reproduction.

A switching circuit 12 changes over the rotary heads HA and HB upon reproduction, and a like switching circuit 13 changes over the rotary heads HA and HB upon recording. The switching circuits 12 and 13 are alternately connected to the position illustrated in Figure 5 and to the opposite position in response to a switching signal RFSW at every 1/2 rotating period of the rotary heads HA and HB.

The switching signal RFSW is generated as follows. A pulse generator 14 is associated with the rotation of a drum motor 18. From this pulse generator 14, there is derived a pulse PG having a frequency of 30 Hz which indicates the absolute rotary phases of the rotary heads HA and HB. This pulse PG is supplied to a waveform shaping circuit 15 from which a square wave signal SC having a duty ratio of 50° is derived. This square wave signal SC is supplied to a drum servo circuit 17 as a reference signal for the drum phase servo. An output signal from the drum servo circuit 17 is supplied to the drum motor 18, controlling the rotary phase of the drum motor 18.

Further, the square wave signal SC is supplied to a switching signal generating circuit 16 which generates the switching signal RFSW. This switching signal RFSW is supplied to a PCM area signal generating circuit 20 which generates an area signal PA indicating an area in which the PCM audio signal is to be recorded and/or reproduced.

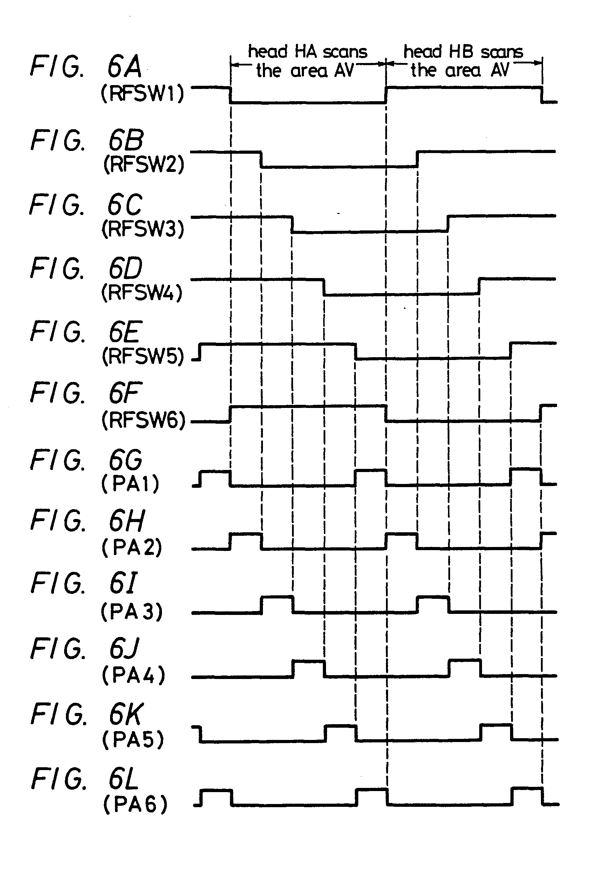

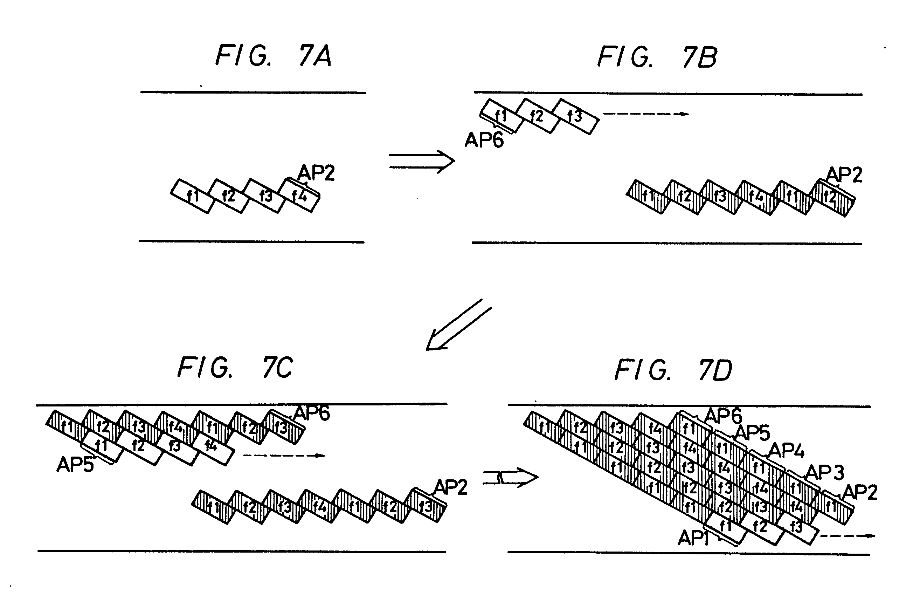

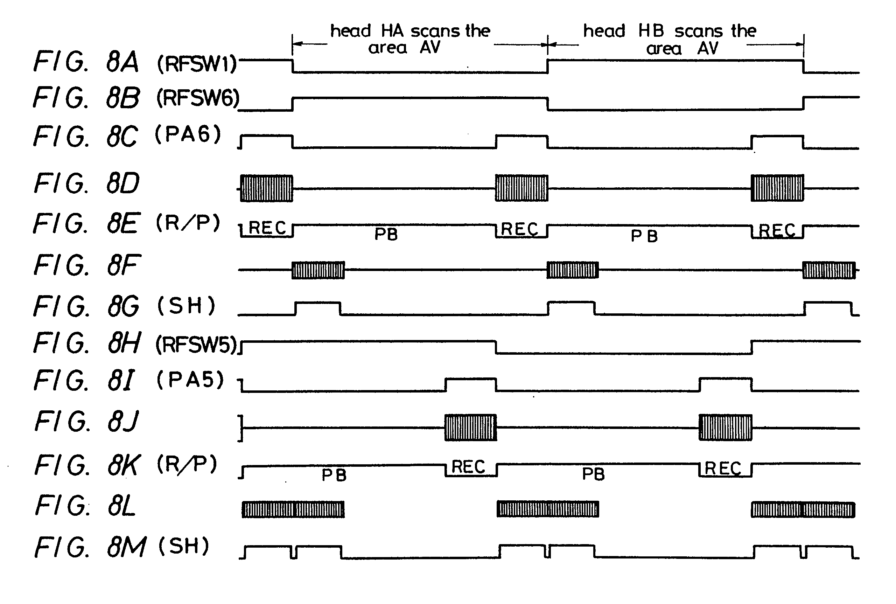

In the multi-PCM mode, when the PCM audio signal is recorded in the area AP1, the switching signal RFSW from the generating circuit 16 is in the form of a signal RFSW1. For example, it becomes "0" during a period in which the rotary head HA scans the area AV and "1" during a period in which the rotary head HB scans the area AV, as shown in Figure 6A. This is similar to the normal mode of the 8-mm video tape recorder using the track pattern shown in Figure 2. The area signal PA, at that time, is in the form of a signal PA1 which is "1" during a period in which the rotary heads HA and HB scan the area AP1, as shown in Figure 6G.

When the PCM audio signal is recorded in the area AP2, the switching signal RFSW and the area signal PA are respectively formed by a signal RFSW2 (Figure 6B) and the signal PA2 (Figure 6H) which result from respectively phase-shifting the signals RFSW1 and PA1 by the rotation period of 36°. When the PCM audio signal is recorded in the area AP3, the signals RFSW and PA are formed by signals RFSW3 and PA3 (Figures 6C and 6I), which result from phase-shifting the signals RFSW1 and PA1 by the period of $36° \times 2 = 72°$. In like manner, when the PCM audio signal is recorded in the area AP4, the signals RFSW and PA are formed by signals RFSW4 and PA4 (Figures 6D and 6J), which result from phase-shifting the signals RFSW1 and PA1 by the period of $36° \times 3 = 108°$. When the PCM audio signal is recorded in the area AP5, the signals RFSW and PA are formed by signals RFSW5 and PA5 (Figures 6E and 6K) which result from phase-shifting the signals RFSW1 and PA1 by the period of $36° \times 4 = 144°$. Finally, when the PCM audio signal is recorded in the area AP6, the signals RFSW and PA are formed by signals RFSW6 and PA6 (Figures 6F and 6L), which result from phase-shifting the signals RFSW and PA by the period of $36° \times 5 = 180°$. These signals are obtained as the head switching signal RFSW and the area signal PA, respectively.

Referring back to Figure 5, in the multi-PCM mode, it is determined by the instruction issued from the system controller 10 which area of the areas AP1 to AP6 is to be used, and the switching signal RFSW and the area signal PA of each area selected are generated from the switching signal generating circuit 16 and the PCM area signal generating circuit 20, respectively.

The switching circuits 12 and 13 are then connected to the terminals B during a period in which the switching signal RFSW is "0" and to the terminals A during a period in which it is "1". Further, the area signal PA is supplied to a PCM processor 21 which reads (upon recording) a signal from and/or writes (upon reproduction) a signal in a RAM (random access memory) provided in the PCM processor 21 during a period specified by this area signal PA.

A description will now be given of a method of producing, for example, a master tape for dubbing.

In this case, starting with an unrecorded (empty) tape, recording in the area AP2 is carried out first.

Specifically, the signal RFSW2 is first generated as the switching signal RFSW, and the signal PA2 as the area signal PA. Furthermore, the switching circuits 11A and 11B are changed in position to the terminals REC in response to the recording and reproducing switching signal R/P from the system controller 10.

Then, left and right channel audio signals are supplied through input terminals 22L and 22R to the PCM processor 21 in which they are converted to PCM data. This PCM data is read out from the PCM processor 21 in response to the area signal PA2 during the period in which the rotary heads HA and HB scan the area AP2 on the tape 2. The PCM data thus read out is supplied through an adder 23, the switching circuit 13, and a recording amplifier 26A or 26B to the rotary head HA or HB. Thus, the PCM data is written or recorded in the area AP2.

At that time, from a pilot signal generating circuit 24, there are derived pilot signals at four frequencies f1, f2, f3 and f4, typically ranging from 100 kHz to 200 kHz, under the condition that the signals at these frequencies f1 to f4 are cyclically sequentially changed at every track in response to the switching signals RFSW. The pilot signal thus derived is supplied through a gate circuit 25 to the adder 23 only during the period of the area signal PA. Accordingly, in the PCM audio track of the area AP2, there are recorded the pilot signals with frequencies f1 to f4 such that they are superimposed upon the PCM audio signal. Thus, the frequencies are changed cyclically at every track in sequence, as shown in Figure 7A.

Playback of the PCM signal from the area AP2 thus recorded will now be described. In the playback mode, the switching signal RFSW and the area signal PA are constituted by the signals RFSW2 and PA2 in the recording mode.

The outputs from the rotary heads HA and HB are supplied through playback amplifiers 27A and 27B to the switching circuit 12. When the switching circuit 12 is changed in position in response to the switching signal RFSW2, the PCM audio signal from the area AP2 is supplied to the PCM processor 21 and thereby demodulated. Then the PCM signal from this area AP2 is written into the RAM of the PCM processor 21 in response to the area signal PA2, corrected for error and otherwise processed as required, and is then reconverted to left and right channel analog audio signals which are fed to output terminals 34L and 34R. In this playback mode, the reproduced output from the switching circuit 12 is also supplied to a low pass filter 28 which filters out the pilot signal. The pilot signal is supplied to a tracking error signal generating circuit 29. The pilot signals at four frequencies are supplied from the pilot signal generating circuit 24 to the tracking error signal generating circuit 29 under the condition that the pilot signals at four frequencies are switched at every track in response to the switching signal RFSW. Then the reproduced pilot signals and the reference pilot signals from the pilot signal generating circuit 24 are compared in the tracking error signal generating circuit 29 thereby to generate a tracking error signal. In this case, since the tracking error signal is generated from the tracking error signal generating circuit 29 only during the period of the area AP2, a sample and hold signal SH formed on the basis of the area signal PA is supplied from the system controller 10 to the tracking error signal generating circuit 29, which samples and holds the tracking error signal of the area AP2. The sampled and held tracking error signal is supplied through a drive amplifier 30 to a motor 31 for a capstan 32 which controls the movement of the magnetic tape 2. Thus, the rotary heads HA and HB are controlled so as to track correctly the recording tracks of the area AP2. A pinch roller 33 presses the magnetic tape 2 against the capstan 32 so as to move the magnetic tape 2.

After recording has been carried out in the area AP2 as described above, if it is required to record the PCM signal in another area, for example, the area AP6, the area AP6 is specified as such a recording area by the system controller 10.

Then, the switching signal RFSW changes to the signal RFSW6 (Figure 8B) and the area signal PA changes to the signal PA6 (Figure 8C). Accordingly, during the period in which this signal PA6 is "1", the PCM signal is read out from the RAM provided in the PCM processor 21 as shown in Figure 8D, and is then recorded in the area AP6. At that time, the recording and reproducing switching signal R/P from the system controller 10 is "0" only during the period in which the heads HA and HB scan the area AP6 as shown in Figure 8E, connecting the switching circuits 11A and 11B to the terminals REC with the result that the apparatus is placed in the recording mode. The switching circuits 11A and 11B are connected to the terminals PB during other periods, and thus the apparatus is set in the reproducing mode. Therefore, a mixed signal of the PCM signal and the pilot signal is reproduced from the previously-recorded area AP2 (see Figure 8F). This mixed signal is then supplied to the low pass filter 28, and thus the reproduced pilot signal is filtered out so that the tracking error signal is generated in the tracking error signal generating circuit 29.

At that time, a sample and hold signal SH, which is "1" during the period of the area AP2 (Figure 8G), is derived from the system controller 10, thus sampling and holding the aforementioned tracking error signal. The tracking error signal thus sampled and held is supplied through the drive amplifier 30 to the capstan drive motor 31 as earlier described. This effects the tracking servo. Consequently, while the tracking servo based on the reproduced signal from the area AP2 is being effected, recording is carried out in the area AP6 as shown in Figure 7B. As shown in the same figure, the recording tracks of the areas AP6 and AP2 are arranged at the extension of the scanning directions of the rotary heads HA and HB.

In this case, the frequency of the pilot signal superimposed upon the recording signal on the area AP6 of each track is selected on the basis of the frequency of the reference pilot signal supplied to the tracking error signal generating circuit 29 with the result that the pilot signals which are of the same frequency are recorded in the areas AP2 and AP6 during a period in which the heads HA and HB scan the magnetic tape 2 one time.

When the PCM signal is to be recorded, for example, in the area AP5 as the third area, such an area is specified as the area AP5 by the system controller 10.

In this case, the switching signal RFSW changes to the signal RFSW5 (Figure 8H), and the area signal PA changes to the signal PA5 (Figure 8I). Then the recording and reproducing switching signal R/P from the system controller 10 is "0" only during the period of the area AP5 as shown in Figure 8K. Thus, the apparatus is placed in the recording mode thereby to record a PCM signal with a time base compressed during this period, as shown in Figure 8J.

Upon recording in the area AP5, recording has already been carried out in the areas AP2 and AP6 on the magnetic tape 2 so that the reproduced signals are obtained from these areas AP2 and AP6 (Figure 8I), and the reproduced pilot signals from the areas AP2 and AP6 are derived from the low pass filter 28 and then fed to the tracking error signal generating circuit 29. Then, from the system controller 10, there is derived a sample and hold signal SH (Figure 8M) which is "1" during the periods corresponding to these areas AP2 and AP6. Thus, the tracking error signal generating circuit 29 generates a tracking error signal which is used to control tracking with respect to the whole scanning period of the rotary heads HA and HB. In other words, recording in the area AP5 is carried out, while the tracking servo based on the reproduced signals from the areas AP2 and AP6 is being carried out (see Figure 7C). As a result, the tracks on the area AP5 are arranged rectilinearly along the scanning direction of the rotary head together with the tracks on the areas AP2 and AP6.

Similarly, recording is sequentially carried out in the areas AP4, AP3 and AP1 in this order. Each recording is carried out while the tracking servo based on the reproduced pilot signals from other previously-recorded areas is being carried out. As a result, as shown in Figure 7D, the tracks on the areas AP1 to AP6 are arranged rectilinearly along the scanning direction of the rotary head.

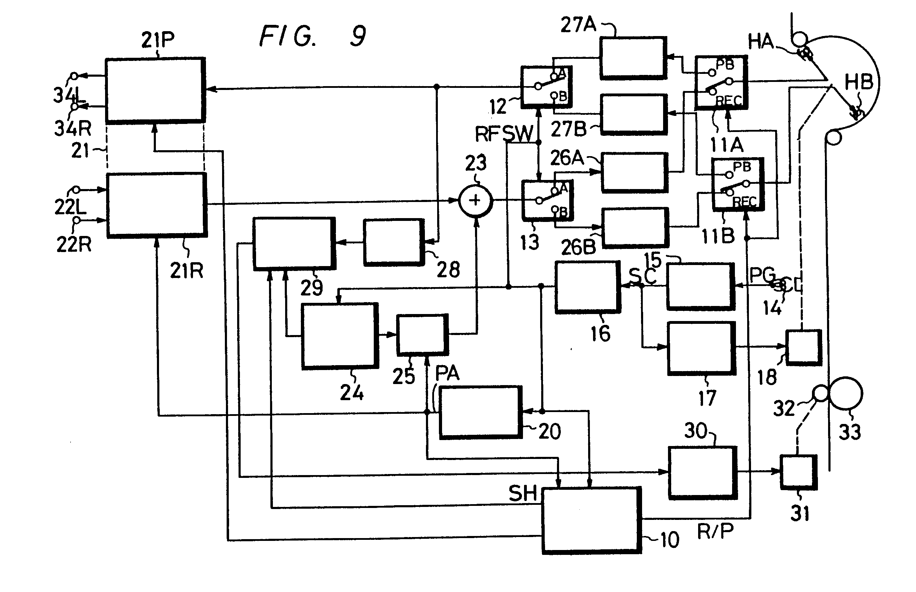

Since, in the first embodiment, a master tape for dubbing is being produced, when recording is carried out in one area, it is not necessary to match the synchronisation of the signal to be recorded with that of the previously-recorded area or areas. However, when different musical instruments are recorded in the respective areas and the signals of the six channels are all to be reproduced simultaneously as if the respective musical instruments were being played in concert, recording must be carried out in each of the areas while checking the sounds reproduced from the previously-recorded areas. Figure 9 is a block diagram showing another embodiment of the apparatus for recording an information signal. In this embodiment, the above-mentioned requirement is taken into consideration. In this case, the area signals are supplied separately to a PCM playback processor 21P and a PCM recording processor 21R which both form part of the PCM processor 21. In Figure 9, like parts corresponding to those of Figure 5 are marked with the same references and will not be described in detail.

Referring to Figure 9, the area signal PA derived from the area signal generator 20 and used to specify the area in which the recording is carried out is supplied to the PCM recording processor 21R. Furthermore, after the recording has been carried out in the area AP2, the system controller 10 generates a signal which always specifies this area AP2. This signal is fed to the PCM playback processor 21P.

Accordingly, the reproduced output of the area AP2 is always derived from the PCM playback processor 21P, so that while checking the sounds from this area AP2, recording on another area can be carried out.

Incidentally, in the case of an 8-mm video tape recorder, the rotary head assembly includes an erase head. This rotary erase head FE is located so that, as shown in Figure 1, it precedes the head HA by a period of 90° in a rotation angle of the rotary head assembly. The rotary erase head FE is formed wide enough in gap width to erase simultaneously both the tracks formed by the heads HA and HB in one scanning.

With the rotary heads thus arranged, when the recording area and an area from which the reproduced tracking servo signal is derived are spaced apart by 90° in a rotation angle of the rotary head, an erase signal enters into the reproduced signal via a rotary transformer as a crosstalk component. This disturbs the tracking servo.

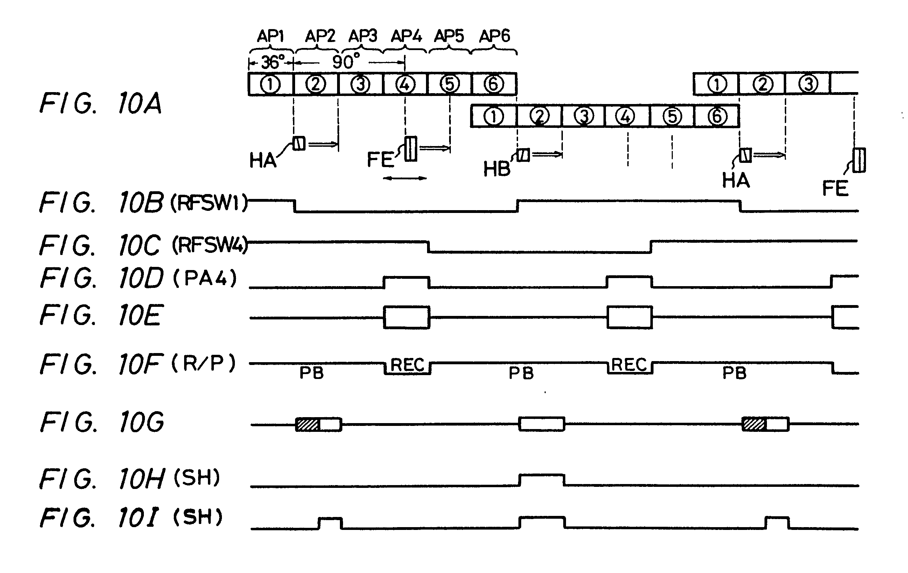

To be more specific, let it be assumed that the area in which recording is to be carried out is the area AP4, and that the area from which the reproduced tracking error signal is to be derived is the area AP2. In this case, when the rotary head HA just starts scanning the area AP2, the rotary erase head FE is located in the midst of the area AP4 whereby the rotary erase head FE has just finished scanning or erasing of the first half of the area AP4, as shown in Figure 10A. As a result, when the rotary erase head FE erases the second half of the area AP4, the rotary head HA scans the first half of the area AP2 so that the erase signal is introduced as noise into the reproduced signal derived from the first half of the area AP2 (see Figure 10G).

When the rotary head HB scans the area AP2, the rotary erase head FE does not carry out an erase operation so that the reproduced output of the rotary head HB is not affected by the erase signal.

Therefore, in the embodiment shown in Figure 9, the sample and hold signal SH supplied from the system controller 10 to the tracking error signal generating circuit 29 is formed as a signal with two field periods in which the rotary head HB scans the area AP2 (see Figure 10B). Alternatively, as shown in Figure 10I, the sample and hold signal SH is formed as a signal which samples and holds during the period in which the rotary head HA scans the area AP2, only the latter half thereof is not affected by the erase signal noise. It samples and holds during the whole period in which the rotary head HB scans the area AP2.

Figure 10B illustrates the signal RFSW1, Figure 10C the signal RFSW4, Figure 10D the area signal PA4, Figure 10E the PCM signal to be recorded in the area AP4, and Figure 10F the recording and reproducing switching signal R/P from the system controller 10.

In the above mentioned embodiments, the recording areas are determined in the sequential order of AP2, AP6, AP5, ...., by the system controller 10, and the sample and hold signal used to obtain the tracking error signal is generated for the area from which the reproduced signal can be reproduced in response thereto. It may be possible that the initial recording area is determined, for example, as the area AP2 and the tracking servo of all other areas in the recording mode is carried out by using only the reproduced pilot signal from this area AP2.

The above-described technique is not limited to the multi-PCM mode of an 8-mm video tape recorder, but can be applied to all recording and/or reproducing apparatus arranged as a system in which the recording track is divided along the scanning direction of the rotary head. Recording and/or reproduction can be carried out at each of the divided areas, and the pilot signal for tracking can be recorded on each track under the condition that it is superimposed upon the information signal.

Furthermore, it is not necessary for the tape recorder to be able only to operate in the multi-PCM mode. Means can be provided whereby, in another operational mode, the apparatus can record a PCM audio signal in the standard predetermined area AP, and can record a video signal in the other areas AV, in other words according to the standard 8-mm format.

While the tracking servo is being carried out by using the pilot signal reproduced from the divided track area on which the recording has already been made, recording is carried out on other divided track areas so that the divided tracks can be aligned rectilinearly along the scanning direction of the rotary head.

## Claims

1. Apparatus for recording a further information signal on a slant track (4A, 4B) of a record medium (2) scanned by a rotary head (HA, HB), said track (4A, 4B) being divided into a number of areas (AP1 to AP6), and a tracking pilot signal superimposed on an original information signal being prerecorded in a predetermined area on said track (4A, 4B), the apparatus comprising:
means (27A, 27B, 28, 29) for reproducing said tracking pilot signal from said predetermined area by means of said rotary head (HA, HB) and for deriving a tracking control signal from the reproduced pilot signal; and
means (26A, 26B) for recording said further information signal in an area other than said predetermined area on said track (4A, 4B)
characterised by
means (10, 29) for sampling and holding the tracking control signal derived from said predetermined area; and
means (30, 31) for controlling tracking of said rotary head (HA, HB) by said sampled and held tracking control signal during recording of said further information signal.

2. Apparatus according to claim 1, wherein said information signal is a pulse-code-modulated audio signal.

3. Apparatus according to claim 2, wherein said track (4A, 4B) is divided equally and the number of areas (AP1 to AP6) is more than two.

4. Apparatus according to claim 3, wherein each one of said areas (AP1 to AP6) is as large as said predetermined area.

5. Apparatus according to claim 3, comprising means for recording in another operational mode a pulse-code-modulated signal in said predetermined area (AP) and for recording a video signal in areas (AV) other than said predetermined area (AP).

6. Apparatus according to any one of the preceding claims, wherein said recording means (26A, 26B) is operable to record a further tracking pilot signal superimposed on said further information signal.

7. Apparatus according to any one of the preceding claims, including two rotary heads (HA, HB) disposed around a rotary drum (1) with an angular distance of 180° therebetween, and a rotary erase head (FE).

8. Apparatus according to claim 7, wherein a track width of said rotary erase head (FE) is twice as large as that of said two rotary heads (HA, HB), and said means (10, 29) for sampling and holding is operative to sample and hold every two fields.

9. Apparatus according to claim 7, wherein said means (10, 29) for sampling and holding is operative to sample and hold during a period in which said rotary head is not operated.

## Patentansprüche

1. Gerät zum Aufzeichnen eines weiteren Informationssignals in einer in eine Anzahl von Bereichen (AP1 bis AP6) unterteilten Schrägspur (4A, 4B) eines von einem rotierenden Kopf (H, HB) abgetasteten Aufzeichnungsmediums (2) und eines Spur-Pilotsignals, das einem zuvor in einem bestimmten Bereich der Schrägspur (4A, 4B) aufgezeichneten ursprünglichen Informationssignal überlagert ist,
mit Mitteln (27A, 27B, 28, 29) zur Wiedergabe des Spur-Pilotsignals von dem bestimmten Bereich durch den rotierenden Kopf (HA, HB) und zur Ableitung eines Spur-Steuersignals aus dem wiedergegebenen Spur-Pilotsignals,
sowie mit Mitteln (26A, 26B) zum Aufzeichnen des weiteren Informationssignals in einem von dem genannten bestimmten Bereich abweichenden Bereich der Schrägspur (4A, 4B),
gekennzeichnet durch
eine Abtast- und Halteeinrichtung (10, 29) zum Abtasten und Halten des von dem bekannten Bereich abgeleiteten Spur-Steuersignals und
Mittel (30, 31) zur Spursteuerung des rotierenden Kopfes (Ha, HB) durch das abgetastete und gespeicherte Spur-Pilotsignal während des Aufzeichnens des weiteren Informationssignals.

2. Gerät nach Anspruch 1, bei dem das Informationssignal ein PCM-Audiosignal ist.

3. Gerät nach Anspruch 2, bei dem die Schrägspur (4A, 4B) gleichmäßig unterteilt ist und die Anzahl der Bereiche (AP1 bis AP6) größer als zwei ist.

4. Gerät nach Anspruch 3, bei dem jeder der genannten Bereiche (AP1 bis AP6) so groß ist wie der bestimmte Bereich.

5. Gerät nach Anspruch 3, das Mittel aufweist, die in einer anderen Betriebsart das Aufzeichnen eines PCM-Signals in dem bestimmten Bereich (AP) und das Aufzeichnen eines Videosignals in anderen Bereichen (AP) ermöglichen.

6. Gerät nach einem der vorhergehenden Ansprüche, bei dem Aufzeichnungs-Mittel (26A, 26B) so betätigbar sind, daß sie ein weiteres Spur-Pilotsignal aufzeichnen, das dem weiteren Informationssignal überlagert ist.

7. Gerät nach einem der vorhergehenden Ansprüche, das zwei im Winkelabstand von 180° am Umfang einer rotierenden Trommel (1) angeordnete rotierende Köpfe (HA, HB) und einen Löschkopf (FE) aufweist.

8. Gerät nach Anspruch 7, bei dem die Spurbreite des Lösch.

kopfes doppelt so groß ist wie die der beiden rotierenden Köpfe (HA, HB) und bei dem die Abtast- und Halteeinrichtung (10, 29) jedes zweite Halbbild abtastet und speichert.

9. Gerät nach Anspruch 7, bei dem die Abtast- und Halteeinrichtung (10, 29) während einer periode abtastet und speichert, in der der rotierende Kopf nicht wirksam ist.

**Revendications**

1. Dispositif d'enregistrement d'un signal d'information supplémentaire sur une piste décalée (4A 4B) d'un support d'enregistrement (2) balayé par une tête rotative (HA, HB), ladite piste (4A, 4B) étant divisée en un certain nombre de zones (AP1 à AP6), et un signal pilote de poursuite superposé à un signal d'information initial étant préenregistré dans une zone prédéterminée de ladite piste (4A, 4B), le dispositif comprenant:

un moyen (27A, 27B, 28, 29), de reproduction dudit signal pilote de poursuite à partir de ladite zone prédéterminée au moyen de ladite tête rotative (HA, HB) et d'obtention d'un signal de commande de poursuite à partir du signal pilote reproduit; et

un moyen (26A, 26B) d'enregistrement dudit signal d'information supplémentaire dans une zone autre que ladite zone prédéterminée de ladite piste (4A, 4B), caractérisé par:

un moyen (10, 29) d'échantillonnage et de maintien du signal de commande de poursuite venant de ladite zone prédéterminée et

un moyen (30, 31) de comande de la poursuite de ladite tête rotative (HA, HB) par ledit signal de commande de poursuite échantillonné et maintenu pendant l'enregistrement dudit signal d'information supplémentaire.

2. Dispositif selon la revendication 1, où ledit signal d'information est un signal audio modulé en codage par impulsions.

3. Dispositif selon la revendication 2, où ladite piste (4A, 4B) est divisée de façon égale et le nombre de zones (AP1 à AP6) est supérieur à 2.

4. Dispositif selon la revendication 3, où chacune desdites zones (AP1 à AP6) a la taille de ladite zone prédéterminée.

5. Dispositif selon la revendication 3, comprenant un moyen d'enregistrement dans un autre mode de fonctionnement d'un signal modulé en codage par impulsions dans ladite zone prédéterminée (AP) et d'enregistrement d'un signal vidéo dans des zones (AV) autres que ladite zone prédéterminée (AP).

6. Dispositif selon l'une quelconque des revendications précédentes, où ledit moyen d'enregistrement (26A, 26B) peut enregistrer un signal pilote de poursuite supplémentaire superposé audit signal d'information supplémentaire.

7. Dispositif selon l'une quelconque des revendications précédentes, incluant deux têtes rotatives (HA, HB) disposées autour d'un tambour rotatif (1) avec une distance angulaire de 180 degrés entre elles, et une tête d'effacement rotative (FE).

8. Dispositif selon la revendication 7, où une largeur de piste de ladite tête d'effacement rotative (FE) a le double de largeur de celle desdites deux têtes rotatives (HA, HB), et ledit moyen (10, 29) d'échantillonnage et maintien sert à échantillonner et à maintenir tous les deux champs.

9. Dispositif selon la revendication 7, où ledit moyen (10, 29) d'échantillonnage et maintien sert à échantillonner et à maintenir durant une période pendant laquelle ladite tête rotative ne fonctionne pas.

FIG. 1

FIG. 2

## FIG. 3

## FIG. 4

FIG. 5

FIG. 6A (RFSW1)

FIG. 6B (RFSW2)

FIG. 6C (RFSW3)

FIG. 6D (RFSW4)

FIG. 6E (RFSW5)

FIG. 6F (RFSW6)

FIG. 6G (PA1)

FIG. 6H (PA2)

FIG. 6I (PA3)

FIG. 6J (PA4)

FIG. 6K (PA5)

FIG. 6L (PA6)

head HA scans the area AV

head HB scans the area AV

FIG. 7A

FIG. 7B

FIG. 7C

FIG. 7D

FIG. 8A (RFSW1)

FIG. 8B (RFSW6)

FIG. 8C (PA6)

FIG. 8D

FIG. 8E (R/P)

FIG. 8F

FIG. 8G (SH)

FIG. 8H (RFSW5)

FIG. 8I (PA5)

FIG. 8J

FIG. 8K (R/P)

FIG. 8L

FIG. 8M (SH)

head HA scans the area AV

head HB scans the area AV

REC    PB    REC    PB    REC

PB    REC    PB    REC

EP 0 213 937 B1

FIG. 9

EP 0 213 937 B1

AP1  AP2  AP3  AP4  AP5  AP6

← 36° →  ←——— 90° ———→

① ② ③ ④ ⑤ ⑥        ① ② ③

① ② ③ ④ ⑤ ⑥

HA    FE    HB →    HA    FE

FIG. 10A

FIG. 10B (RFSW1)

FIG. 10C (RFSW4)

FIG. 10D (PA4)

FIG. 10E

FIG. 10F (R/P)    PB    REC    PB    REC    PB

FIG. 10G

FIG. 10H (SH)

FIG. 10I (SH)

EP 0 213 937 B1